(19) Europäisches Patentamt
European Patent Office
Office européen des brevets

(11) Publication number: **0 256 797 A1**

(12) **EUROPEAN PATENT APPLICATION**

(21) Application number: **87307000.7**

(51) Int. Cl.[4]: **C08F 220/56** , C08F 226/10

(22) Date of filing: **07.08.87**

(30) Priority: **08.08.86 US 894552**

(43) Date of publication of application: **24.02.88 Bulletin 88/08**

(84) Designated Contracting States: **DE FR GB**

(71) Applicant: **Exxon Research and Engineering Company**
**P.O.Box 390 180 Park Avenue**
**Florham Park New Jersey 07932(US)**

(72) Inventor: **Schulz, Donald Norman**
**Valley Crest Road RD 2, Box 58**
**Annandale New Jersey(US)**
Inventor: **Berluche, Enock**
**55 Peddlers Lane**
**Phillipsburg New Jersey(US)**
Inventor: **Maurer, John Joseph**
**9 Crane Circle**
**New Providence New Jersey(US)**
Inventor: **Bock, Jan**
**500 Juniper Lane**
**Bridgewater New Jersey(US)**

(74) Representative: **Pitkin, Robert Wilfred et al**
**ESSO Engineering (Europe) Ltd. Patents & Licences Apex Tower High Street**
**New Malden Surrey KT3 4DJ(GB)**

(54) **Terpolymers.**

(57) Novel N-vinyl pyrrolidone/acrylamide/N-alkyl acrylamide terpolymers have the formula:

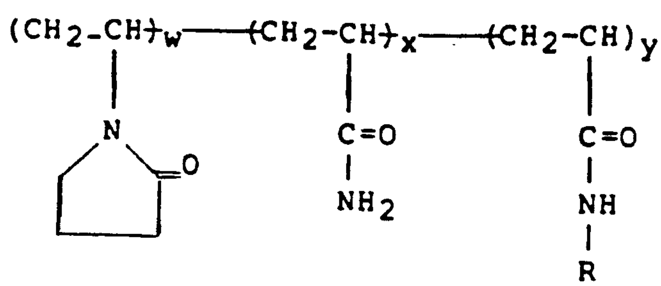

wherein w is 1 to 80 mole percent, preferably 10 to 70 mole percent; x is 10 to 90 mole percent, preferably 30 to 70 mole percent; and y is 0.1 to 10.0 mole percent, preferably 0.2 to 3.0 mole percent; R is alkyl groups having 6 to 30 carbon atoms, preferably 8 to 18.

The terpolymers are useful as improved viscosification agents for aqueous solutions containing, for example, an acid or a base or a salt.

EP 0 256 797 A1

## Terpolymers

The present invention relates to novel terpolymers, which terpolymers have as a property the improved viscosification of an aqueous solution which may contain a high concentration of acid(s), base(s) or salt(s). The agents are suitable for use with, for example, brine solutions.

The viscosification agents of the invention are normally water-soluble or water-dispersible.

The present invention provides terpolymers of N-vinyl pyrrolidone/acrylamide/N-alkyl acrylamide wherein said terpolymers have the formula:

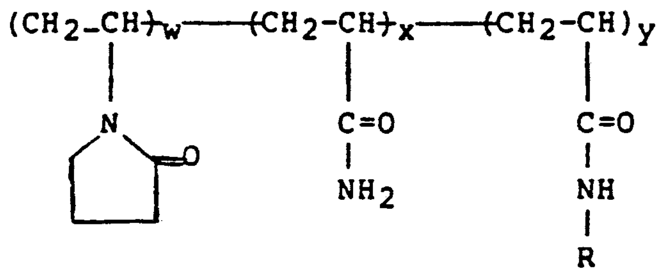

wherein w is 1 to 80 mole percent, more preferably 5 to 75 mole percent, and most preferably 10 to 70 mole percent; x is 10 to 90 mole percent, more preferably 20 to 80 mole percent, and most preferably 30 to 70 mole percent; and y is 0.1 to 10.0 mole percent, more preferably 0.15 to 5.0 mole percent, and most preferably 0.2 to 3.0 mole percent; R is alkyl groups having 6 to 30 carbon atoms, more preferably 7 to 20 and most preferably 8 to 18.

The polymer molecular weights, as indicated by intrinsic viscosities and confirmed by sedimentation/light scattering, for the terpolymers of acrylamide/N-vinyl pyrrolidone/N-alkyl acrylamide is $10^3$ to $2x10^7$, more preferably $10^4$ to $1.5x10^7$, and most preferably $10^5$ to $5x10^6$. The molecular weight of the terpolymers is determined from solution viscosity measurements via standard methods and confirmed by sedimentation/light scattering. Specifically, following the initial isolation of the water soluble terpolymers they are redissolved in salt water (e.g., 2% NaCl or 3% NaCl + 0.3% $CaCl_2$) to give solutions with known concentrations. The low shear viscosities of the solutions and the pure solvent were measured in a standard Contraves viscometer. Subsequently, the reduced viscosity is calculated through standard methods utilizing these values. Extrapolation to zero polymer concentration leads to the intrinsic viscosity of the polymer solution. The intrinsic viscosity is directly related to the molecular weight through the well-known Mark-Houwink relationship.

$[\eta] = KM\alpha$, where $[\eta]$ is the intrinsic viscosity, M = molecular weight, K and $\alpha$ are a function of polymer structure.

The intrinsic viscosity of the terpolymers (.15% polymer, 3.0% NaCl, 0.3% $CaCl_2$) at $1.28s^{-1}$ is 5 to 20.

The terpolymers, which are normally water soluble, of acrylamide/N-vinyl pyrrolidone/N-alkylacrylamide may be formed by a free radical terpolymerization in an aqueous medium which comprises the steps of forming a homogeneous mixture of acrylamide monomer, N-vinyl pyrrolidone monomer and N-alkylacrylamide monomer in the presence of an alkyl or alkylarene sulfate or sulfonate, such as sodium lauryl sulfate (SDS), to help solubilize the N-alkylacrylamide in distilled water, wherein the total monomer concentration is preferably 1 to 40 grams of total monomer per 100 grams of water, more preferably 2 to 30 and most preferably 5 to 20; SDS concentration is preferably 0.1-15 grams per 100 grams of water, more preferably from 0.2-10 grams per 100 grams of water, and most preferably0.8-7 grams per 100 grams of water; purging the reaction solution, preferably with nitrogen; heating the reaction solution to at least 10°C while maintaining the purge; adding sufficient free radical initiator of the proper decomposition temperature to initiate terpolymerization of the acrylamide monomer, the N-vinyl pyrrolidone monomer, and the N-alkyl acrylamide monomer; terpolymerizing said monomers of acrylamide, N-vinyl pyrrolidone and N-alkyl acrylamide monomer at a sufficient temperature and for a sufficient period of time to form said water soluble terpolymer; and recovering said terpolymer from said reaction solution. The terpolymers are normally water soluble products.

The terpolymers of the present invention have un-expectedly high viscosification power, for example in brine solutions.

Terpolymerization of the acrylamide monomer, N-vinyl pyrrolidone monomer, and N-alkyl acrylamide monomer is preferably effected at a temperature of 10°C to 90°C, more preferably at 10°C to 70°C, and most preferably 20°C to 60°C for a period of time of preferably 1 to 24 hours, more preferably 2 to 10 hours, and most preferably 3 to 8 hours.

Although NVP monomer will dissolve substantial quantities of long chain N-alkylacrylamide monomers (e.g., n-octylacrylamide), the addition of water and AM monomer often leads to a cloudy, nonhomogeneous reaction mixture. Addition of SDS clarifies the solution and solubilizes the hydrophobic monomer in the aqueous phase, thereby improving the process. Also, the use of SDS leads to a more gel-free product as judged by visual inspection.

A suitable method of recovery of a formed water soluble terpolymer from the aqueous reaction solution comprises precipitation in acetone, methanol, ethanol and the like.

Suitable water or oil soluble free radical initiators for the free radical terpolymerization of the acrylamide monomers, the N-vinyl pyrrolidone, and the N-alkyl acrylamide monomer are selected from the group consisting of azo compounds, peroxides and persulfates. However, the preferred initiators are azo compounds, such as 2,2'-azobisisobutyronitrile (AIBN) (e.g., DuPont's Vazo-64[R]), 2,2'-azobis (2-amidopropane) hydrochloride (Wako's V-50[R]), 2-t-butylazo-2-cyanopropane. Most preferred initiators are low temperature azo initiators, such as 2,2'azobis (2,4-dimethyl-4-methoxyvaleronitrile) (Dupont's Vazo-33[R]). The use of low temperature initiation and polymerization leads to higher polymer molecular weights. The concentration of the free radical initiator is preferably 0.001 to 2.0 grams of free radical initiator per 100 grams of total monomer, more preferably 0.01 to 1.0, and most preferably 0.05 to 0.1.

## DESCRIPTION OF THE PREFERRED EMBODIMENTS

The following Examples no-limitatively illustrate the present invention.

The following nomenclature will be used in the Examples; NVP-RAM = NVP/long chain N-alkylacrylamide/acrylamide terpolymer; NVP-AM = NVP/acrylamide copolymer; PAM = polyacrylamide; SDS = sodium dodecyl sulfate.

### Example 1

### Preparation of NVP-RAM Terpolymers (11044-63)

A 1,000 ml resin flask was fitted with a condenser, thermometer, stirrer (electric), and nitro-gen inlet and outlet. N-octylacrylamide (0.65 g), NVP (11.88 g) and acrylamide (17.47 g) in 470 g $H_2O$ were polymerized with 0.123 g AIBN in the presence of 1.7 g sodium dodecyl sulfate (SDS) at 45°C for 18 hours. This corresponds to a $[M]/[I]^{1/2}$ = 60 (monomer to initiator ratio) and total solids content of 6% in $H_2O$. Although NVP helps solubilize octylacrylamides, the SDS further homogenizes and clarifies the reaction mixture. The resulting polymer solution was a soluble gel. It was passed through a meat grinder and diluted further with water to 1% concentration. The polymer solution was precipitated in 6 liters of acetone. Copolymers with various ratios of $C_8$ hydrophobe were prepared and their viscometrics are compared in Table I. The viscosificaion efficiency of the instant copolymers compared with the composition containing no hydrophobe ($NVP/AM/C_8AM$ = 30/70/0) is clearly evident.

TABLE I

N-VINYL-PYRROLIDONE-ACRYLAMIDE-N-OCTYLACRYLAMIDE COPOLYMERS

| Polymer Type $NVP/AM/C_8AM$ (a) | .15% Polymer, 3.0% NaCl, 0.3% $CaCl_2$ Brine Solution, CPS |
|---|---|
| 30/70/0 | 3.1 (b) |
| 30/69.5/0.5 | 5.3 |
| 30/69.25/0.75 | 6.8 |
| 30/69.0/1.0 | 17.5 |

(a) $[M]/[I]^{1/2} = 60$
(b) $[\eta] = 7.02$ dl/g in 2% NaCl

Example 2

(13006-59P, 60P,70) Effect of SDS in Tepolymerization

The beneficial effect of SDS in the polymerization was demonstrated by preparing terpolymers of $NVP/AM/C_8AM$ with and without 1% SDS. The charged monomer compositions were $NVP/AM/C_8AM$ = 60/39/1. Polymerizations were run at a $[M]/[I]^{1/2} = 60$; total solids in aqueous solution were 18%; polymerizations were run at about 20°C, using Vazo-3[R] initiator. The batch with the SDS was clearer during the polymerization than the batch without the SDS, indicating homogenation of the $C_8AM$ monomer. The products were precipitated from acetone and dried. Solution viscosities of the two polymers in 3.0% NaCl and 0.3% $CaCl_2$ brine were compared. The polymer using SDS had a viscosity of 9.1 cP at 1.28s $^{\div 1}$, while the polymer prepared without SDS had a viscosity of only 3.2 cP at 1.28 $s^{-1}$.

Example 3

The rate of base ($OH^-$) catalyzed hydrolysis of NVP-RAM terpolymers compared to NVP/AM copolymers and PAM (polyacrylamide homopolymer) at 40°C is shown in Table II. Surprisingly, the NVP-RAM polymers with varying amounts of $C_8$ (.5-1% $C_8$) show less hydrolysis than both RAM and PAM polymers known in the art (Table II).

TABLE II

% HYDROLYSIS VERSUS TIME FOR TERPOLYMERS

| Polymer Type | Hydrolysis Time, Hours(a) | % Hydrolysis |
|---|---|---|
| PAM | 3 | 22.0 |
| | 6 | 22.5 |
| | 12 | 24.0 |
| RAM (1% $C_8$ AM) | 3 | 14.0 |
| | 6 | 15.5 |
| | 12 | 17.0 |
| RAM-NVP (1% $C_8$ AM) | 3 | 6.9 |
| | 6 | 6.4 |
| | 12 | 7.4 |

(a) 40°C, ratio of moles of NaOH/moles polymer = 1/3.

Comparative Example

Preparation of NVP/AM/N-$C_{10}$ AM Terpolymers

For comparison of polymers of the present invention with known polymers disclosed in US-A-4,395,524, the following Example was conducted to duplicate the 65AM/30NVP/5N-$C_{10}$AM (weight percent) polymer of Table VIII therein. This Example corresponds to a 75AM/23NVP/2 mole percent polymer, a $[M]/[I]^{½}$ = 34.0 and a polymerization solids level of 10%.

A 250 ml flask is equipped with a thermometer, condenser, air stir motor and an argon inlet tube. Charge reactor with 15.0 g (.135 M) 1-vinyl-2-pyrrolidone, 2.94 g (.041 M) acrylamide, 0.76 g (3.6 x $10^{-3}$M) isomeric N-(n-decyl) acrylamide, 38.7 g tert butanol, 124.5 g deaerated $H_2O$. Stir and heat mixture to 50°C while maintaining a subsurface argon surge. Add 0.38 g ammonium persulfate in 1.7 g $H_2O$, 3.4 g isopropanol. Increase reaction temperature to 80° an maintain in argon for 4 hours. Add 0.19 g ammonium persulfate and maintain at 80°C for 1 hour. Evaporate tert butanol on Rotovap, dilute cement with 100 ml methanol and precipitate into acetone. Soak precipitated solid in acetone over night, isolate solid and vacuum dry. Yield is 29.4%. This polymer had a viscosity (.15% polymer, 3.0% NaCl, 0.30% $CaCl_2$) of only 0.91 cP at 1.28$s^{-1}$ and a viscosity (.15% polymer, 3.0% NaCl, 0.30% $CaCl_2$) of 0.94 cP at 11.0$s^{-1}$. This is clearly a product of much lower viscosification power than those produced by Examples 1 and 2 of the present invention.

## Claims

1. A terpolymer having the formula:

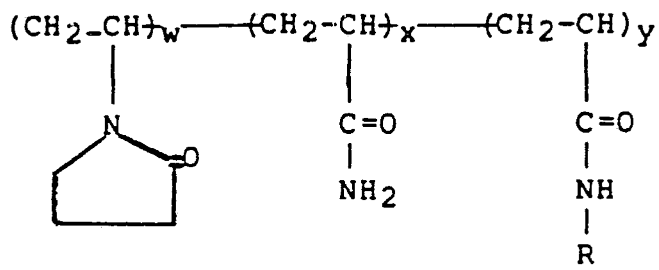

wherein w is 1 to 80 mole percent; x is 10 to 90 mole percent; y is 0.1 to 10.0 mole percent; and R is an alkyl group having 6 to 30 carbon atoms.

2. A terpolymer as claimed in claim 1, wherein w is 10 to 70 mole percent.

3. A terpolymer as claimed in claim 1 or claim 2, wherein x is 30 to 70 mole percent.

4. A terpolymer as claimed in any preceding claim, wherein y is 0.2 to 3.0 per mole percent.

5. A terpolymer as claimed in any preceding claim, wherein R is an alkyl group of 8 to 18 carbon atoms.

6. The use as a viscosification agent of a terpolymer claimed in any preceding claim.

European Patent Office

# EUROPEAN SEARCH REPORT

Application number

EP 87 30 7000

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | US-A-3 970 606 (N.D. FIELD et al.)<br>* Claims 1,2,13 *<br>----- | 1-6 | C 08 F 220/56<br>C 08 F 226/10 |
| | | | TECHNICAL FIELDS SEARCHED (Int. Cl 4) |
| | | | C 08 F |

The present search report has been drawn up for all claims

| Place of search | Date of completion of the search | Examiner |
|---|---|---|
| THE HAGUE | 11-11-1987 | CAUWENBERG C.L.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82